# EUROPEAN PATENT APPLICATION

(11) **EP 4 231 065 A1**
(43) Date of publication of application: **23.08.2023**
(21) Application number: 22216097.0
(22) Date of filing: 22.12.2022
(51) Int. Cl.: G02B 6/02

(54) **TRENCH ASSISTED MULTI-CORE OPTICAL FIBER WITH REDUCED CROSSTALK**

(30) Priority: 28.12.2021 IN 202111061222
(71) Applicant: Sterlite Technologies Limited, Haryana 122002 (IN)
(72) Inventor: Malviya, Apeksha, 122002 Gurugram (IN); Reddy Munige, Srinivas, 122002 Gurugram (IN); Balakrishnan, Janarthanan, 122002 Gurugram (IN); Shubham, 122002 Gurugram (IN); Balakrishnan, Ranjith, 122002 Gurugram (IN); Pandey, Anand, 122002 Gurugram (IN)
(74) Representative: Petraz, Gilberto Luigi

(57) **Abstract**

The present disclosure relates to a multi-core optical fiber having a plurality of cores extending parallelly along a central axis of the multi-core optical fiber. Each core of the plurality of cores is up-doped with an up-dopant. The multi-core optical fiber further has a plurality of buffer layers such that each buffer layer of the plurality of buffer layers envelop a corresponding core of the plurality of cores. Each buffer layer of the plurality of buffer layers has a predefined buffer layer thickness and a plurality of trench layers such that each trench layer of the plurality of trench layers envelops a corresponding buffer layer of the plurality of buffer layers. The multi-core optical fiber has an inter-core crosstalk of less than -30 decibel/kilometres (dB/km) at a wavelength of 1550 nanometres (nm).

## Description

### TECHNICAL FIELD

Embodiments of the present disclosure relate to the field of optical fibers and more particularly, relate to a trench assisted multi-core optical fiber.

The present application claims the benefit of Indian Application No. 202111061222 titled "Trench assisted multi-core optical fiber" filed by the applicant on 28/12/2021, which is incorporated herein by reference in its entirety.

### BACKGROUND ART

Telecommunications networks include access networks where enduser subscribers connect to service providers. With the advancement of science and technology, various modern technologies are being employed for communication purposes. Optical fiber cables are a critical component of a modern communication network across the globe. Optical fiber cables utilize optical fibers to transmit signals such as voice, video, image, data or information. Optical fibers are strands of glass fiber processed so that light beams transmitted through the glass fiber are subject to total internal reflection wherein a large fraction of the incident intensity of light directed into the fiber is received at the other end of the fiber.

As the data and data rate requirements are increasing, more optical fibers are required in the network to support higher capacity, bandwidth and speed. One of the solutions to address the requirement of capacity, bandwidth and speed is multicore optical fibers (MCF) that pack multiple cores in a single fiber and increases transmission density of the single fiber. A MCF typically comprises a central core surrounded by several satellite cores in a radial pattern surrounding the central core. Each of the central and satellite cores is potentially a light carrying path, and the MCF thus provides multiple parallel paths for optical signal transmission and/or reception in a single fiber. Multi-core optical fibers have a plurality of cores extending along the multi-core optical fibers, in a cladding and are available as an optical transmission line capable of transmitting information.

However, since the core regions are close to each other, when a small-diameter bend is applied in a state where high-power light is propagating through each core, it is caused by the propagation of light leaked from each core, and the fiber. When the length is long, crosstalk occurs due to a part of the light propagating outside the core region even when the bending is not applied. Crosstalk is a potential disadvantage of multi-core relative to multi-fiber solutions. A requirement of low total crosstalk tends to put a limit on the density of cores, and thus the capacity scaling, as well as having an impact on the amount of signal processing and conditioning necessary to recover transmitted information.

Such multi-core optical fibers are required to reduce inter-core crosstalk. By reducing the inter-core crosstalk, it becomes easy to implement transmission of optical signals by use of a longer multi-core optical fiber. Moreover, the reduction of crosstalk allows reduction in core pitch between adjacent cores of the plurality of cores and thus allows a larger number of cores to be arranged in the cladding.

US patent application no. US8406595B2 titled "Multi-core fiber" discloses a multi-core optical fiber having a plurality of cores where at least a pair of cores are of different types (i.e., some cores may have a different refractive index from rest of the other cores).

Chinese patent application no. CN109283613A titled "Crosstalk multi-core optical fiber between a kind of low core" discloses crosstalk multi-core optical fiber between a kind of low core characterised in that including core, the annular ditch groove knot being centered around around core Structure I, and extend along shaft axis of optic fibre and be in six outer cores that regular hexagon arranges, the ring-type being centered around around six outer cores respectively Groove structure II, III, covering core, six outer cores, groove structure I, II, III covering.

US patent application no. US8923678B2 titled "Techniques for manipulating crosstalk in multicore fibers" discloses a multicore optical fiber comprising at least one segment of the longitudinal region includes a twist that is configured such that when the twisted segment is subjected to a bend having a selected radius, the twist creates a controlled change in the amount of crosstalk between the at least two core regions, compared with the amount of crosstalk between the at least two core regions when a bend having the selected radius is introduced into a non-twisted segment of the fiber.

However, there are a few drawbacks in the currently similar technologies employing multi-core optical fibers with reduced value of crosstalk. Conventionally used multi-core optical fiber can attain low crosstalk when the relative refractive index difference of the cores with respect to the cladding is changed slightly between the adjacent cores, since a power transfer ratio between cores adjacent to each other can be made sufficiently low. However, there is a demand for further reduction in the inter-core crosstalk than in the multi-core optical fibers available in which the effective refractive indexes of the cores adjacent to each other are changed.

Moreover, increasing Δ (relative refractive index difference between the core region and the cladding region) increases the confinement of light in the core region, and thus is effective in reducing crosstalk between the core regions, but is likely to cause an increase in transmission loss and nonlinearity of the optical fiber. Therefore, in a multi-core optical fiber, there is a high risk that the transmission performance per core region will deteriorate. Further, since the core pitch of the multi-core optical fiber is generally small, strong optical coupling between optical signals in a plurality of cores occurs to generate crosstalk, which seriously affects the transmission performance of the optical fiber. To reduce the crosstalk between cores, the most direct method is to increase the core pitch, but this results in less core density and transmission capacity, and it is not the best choice to reduce the crosstalk by increasing the core pitch in view of manufacturing process and cost.

Accordingly, to overcome the disadvantages of the prior art, there is an urgent need for a technical solution that overcomes the above-stated limitations in the prior arts. The present disclosure provides a trench assisted multi-core optical fiber with reduced crosstalk.

### SUMMARY OF THE DISCLOSURE

Embodiments of the present disclosure relate to a multi-core optical fiber comprising a plurality of cores extending parallelly along a central axis of the multi-core optical fiber, a one or more buffer layers that envelops at least one of the plurality of cores and each core of the plurality of cores, and one or more trench layers enveloping at least one of each of the plurality of buffer layers and the plurality of buffer layers. In particular, each core of the plurality of cores is up-doped with an up-dopant. Moreover, each trench layer of the plurality of trench layers is down-doped with a down-dopant.

According to a first aspect of the present disclosure, each buffer layer of the plurality of buffer layers has a predefined buffer layer radius in a range of 4 micrometers (µm) to 7 µm.

In accordance with an embodiment of the present disclosure, a core pitch between a pair of adjacent cores of the plurality of cores is in range of 35 µm to 45 µm.

According to a second aspect, each core of the plurality of cores, each buffer layer of the plurality of buffer layers, and each trench layer of the plurality of trench layers has an associated core relative refractive index RRI, a buffer RRI, and a trench RRI, respectively, wherein the core RRI is greater than the buffer RRI and the buffer RRI is greater than the trench RRI.

In accordance with an embodiment of the present disclosure, the multi-core optical fiber further comprises a cladding and a coating such that the cladding envelopes each trench layer of the plurality of trench layers and the coating envelops the cladding.

In accordance with an embodiment of the present disclosure, each core of the plurality of cores has a shape selected from at least one of, a circular shape, an oval shape, a hexagonal shape, and a triangular shape.

In accordance with an embodiment of the present disclosure, each buffer layer of the plurality of buffer layers has traces of an up-dopant and a down-dopant. In particular, the up-dopant is associated with the plurality of cores and the down-dopant is associated with the plurality of trench layers.

In accordance with an embodiment of the present disclosure, the up-dopant is germanium and the down-dopant is fluorine.

In accordance with an embodiment of the present disclosure, an inter-core crosstalk between the plurality of cores at a wavelength of 1550 nanometres (nm) is less than -30 decibel/kilometres (dB/km).

Another embodiment of the present disclosure relates to a multicore optical fiber comprising a plurality of cores extending parallelly along a central axis of the multi-core optical fiber, a plurality of buffer layers, and a plurality of trench layers. In particular, each core of the plurality of cores is up-doped with an up-dopant. Moreover, each buffer layer of the plurality of buffer layers envelops a corresponding core of the plurality of cores. Furthermore, each trench layer of the plurality of trench layers envelops a corresponding buffer layer of the plurality of buffer layers. Further, each trench layer of the plurality of trench layers is down-doped with a down-dopant.

According to a third aspect, the plurality of cores is an even number of cores.

In accordance with an embodiment of the present disclosure, each buffer layer of the plurality of buffer layers has a predefined buffer layer radius in a range of 4 micrometers (µm) to 7 µm.

In accordance with an embodiment of the present disclosure, a core pitch between a pair of adjacent cores of the plurality of cores is in range of 35 µm to 45 µm.

According to a fourth aspect, each core of the plurality of cores, each buffer layer of the plurality of buffer layers, and each trench layer of the plurality of trench layers has an associated core relative refractive index RRI, a buffer RRI, and a trench RRI, respectively, wherein the core RRI is greater than the buffer RRI and the buffer RRI is greater than the trench RRI.

In accordance with an embodiment of the present disclosure, the multi-core optical fiber further comprises a cladding and a coating such that the cladding envelopes each trench layer of the plurality of trench layers and the coating envelops the cladding.

In accordance with an embodiment of the present disclosure, each core of the plurality of cores has a shape selected from at least one of, a circular shape, an oval shape, a hexagonal shape, and a triangular shape.

In accordance with an embodiment of the present disclosure, each buffer layer of the plurality of buffer layers has traces of an up-dopant and a down-dopant. In particular, the up-dopant is associated with the plurality of cores and the down-dopant is associated with the plurality of trench layers.

In accordance with an embodiment of the present disclosure, the up-dopant is germanium and the down-dopant is fluorine.

In accordance with an embodiment of the present disclosure, an inter-core crosstalk between the plurality of cores at a wavelength of 1550 nanometres (nm) is less than -30 decibel/kilometres (dB/km).

In accordance with an embodiment of the present disclosure, each core of the plurality of cores is up-doped with germanium in a range of greater than or equal to 1 wt. % of germanium and less than or equal to 10 wt. % of germanium.

The foregoing solutions of the present disclosure are attained by providing a trench assisted multi-core optical fiber with reduced crosstalk.

### BRIEF DESCRIPTION OF THE DRAWINGS

So that the manner in which the above-recited features of the present disclosure is understood in detail, a more particular description of the disclosure, briefly summarized above, may be had by reference to embodiments, some of which are illustrated in the appended drawings. It is to be noted, however, that the appended drawings illustrate only typical embodiments of this disclosure and are therefore not to be considered limiting of its scope, for the disclosure may admit to other equally effective embodiments.

The disclosure herein will be better understood from the following description with reference to the drawings, in which:

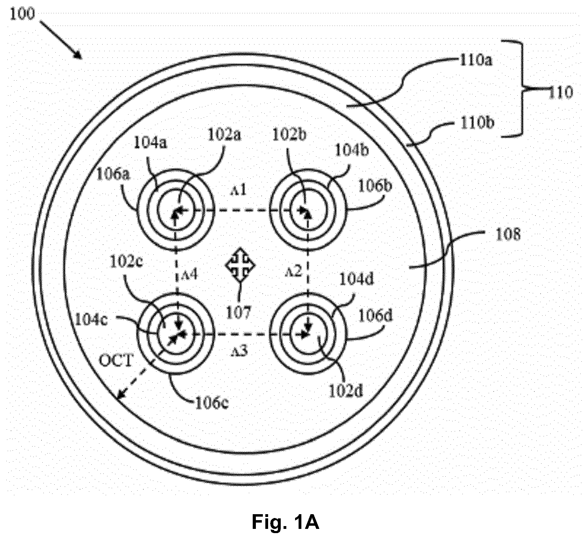

Fig. 1A is a cross-sectional view illustrating a multi-core optical fiber in accordance with an embodiment of the present disclosure;
Fig. 1B is a cross-sectional view illustrating the multi-core optical fiber in accordance with an embodiment of the present disclosure.

### REFERENCE LIST

Multi-core optical fiber - 100
Plurality of cores - 102
First through fourth cores - 102a, 102b, 102c, 102d
Plurality of buffer layers - 104
First through fourth buffer layers - 104a, 104b, 104c, 104d
Plurality of trench layers - 106
First through fourth trench layers - 106a, 106b, 106c, 106d
Central axis - 107
Cladding - 108
Coating layer - 110
Primary coating - 110a
Secondary coating - 110b

The multi-core optical fiber is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

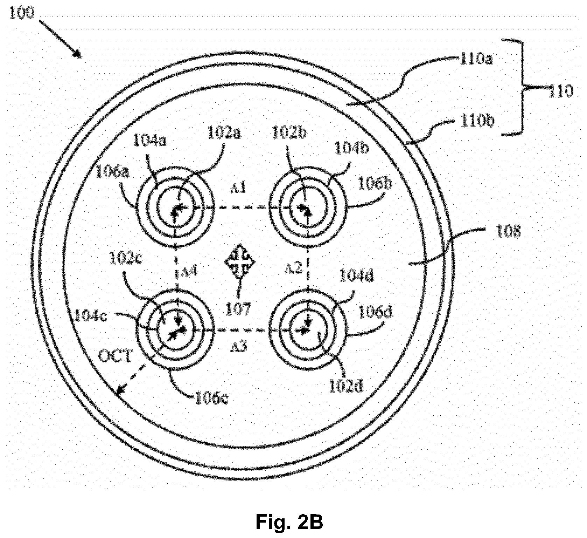

The principles of the present disclosure and their advantages are best understood by referring to FIGS.1 to FIGS. 2. In the following detailed description, numerous specific details are set forth in order to provide a thorough understanding of the embodiment of the disclosure as illustrative or exemplary embodiments of the disclosure, specific embodiments in which the disclosure may be practised are described in sufficient detail to enable those skilled in the art to practice the disclosed embodiments. However, it will be obvious to a person skilled in the art that the embodiments of the disclosure may be practised with or without these specific details. In other instances, well-known methods, procedures and components have not been described in detail so as not to unnecessarily obscure aspects of the embodiments of the disclosure.

The following detailed description is, therefore, not to be taken in a limiting sense, and the scope of the present disclosure is defined by the appended claims and equivalents thereof. The terms "comprising," "including," "having," and the like are synonymous and are used inclusively, in an openended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list. References within the specification to "one embodiment," "an embodiment," "embodiments," or "one or more embodiments" are intended to indicate that a particular feature, structure, or characteristic described in connection with the embodiment is included in at least one embodiment of the present disclosure.

Although the terms first, second, etc. may be used herein to describe various elements, these elements should not be limited by these terms. These terms are generally only used to distinguish one element from another and do not denote any order, ranking, quantity, or importance, but rather are used to distinguish one element from another. Further, the terms "a" and "an" herein do not denote a limitation of quantity, but rather denote the presence of at least one of the referenced items.

The conditional language used herein, such as, among others, "can," "may," "might," "may," "e.g.," and the like, unless specifically stated otherwise, or otherwise understood within the context as used, is generally intended to convey that certain embodiments include, while other embodiments do not include, certain features, elements and/or steps.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

**The following brief definition of terms shall apply throughout the present disclosure:**
Up-dopant refers to a dopant which raises the refractive index of the silica glass relative to pure, un-doped SiO₂. An up-dopant may be present in a region of an optical fiber having a negative relative refractive index when accompanied by one or more other dopants which are not up-dopants.

Down-dopant refers to a dopant which has a propensity to lower the refractive index of the silica glass relative to pure, un-doped SiO₂.

Refractive index profile refers to a relationship between refractive index or relative refractive index and multi-core optical fiber radius.

Fig. 1A is a cross-sectional view illustrating a multi-core optical fiber 100 in accordance with one embodiment of the present disclosure. The multicore optical fiber 100 comprises a plurality of cores 102 including a first through fourth cores 102a, 102b, 102c and 102d, a plurality of buffer layers 104 including a first through fourth buffer layers 104a, 104b, 104c and 104d, a plurality of trench layers 106 including a first through fourth trench layers 106a, 106b, 106c and 106d, and a central axis 107. In particular, the plurality of cores 102 are arranged along the central axis 107 running longitudinally, *i.e.,* parallel to the central axis 107. Moreover, the multi-core optical fiber 100 is designed to employ space division multiplexing (SDM) technique to transmit a plurality of optical signals through the plurality of cores 102 simultaneously. Furthermore, the multicore optical fiber 100 may be manufactured by isotropically and/or anisotropically distributing the plurality of cores 102 in the same multi-core optical fiber 100.

Further, the plurality of cores 102 are arranged in a predefined lattice on the cross-section of the multi-core optical fiber 100 perpendicular to an axis extending parallelly along the central axis 107 of the multi-core optical fiber 100.

In accordance with an embodiment of the present disclosure, the predefined lattice is a square lattice. Alternatively, the predefined lattice may be a hexagonal lattice.

In accordance with an embodiment of the present disclosure, each of the cores i.e. the first through fourth cores 102a, 102b, 102c, 102d of the plurality of cores 102 is configured to guide the optical signal. In particular, each of the core of the plurality of cores 102 is a cylindrical fiber running along a length of the multi-core optical fiber 100 and is made up of a material selected from at least one of, a plastic, a pure silica glass, and the like. Moreover, each core of the plurality of cores 102 is made up of a silica glass doped with a suitable up-dopant. Each core of the plurality of cores 102 is up-doped with one or more up-dopants to increase a refractive index of the silica glass. Furthermore, up-dopants may be selected from, but not limited to, Aluminum oxide (Al₂O₃), Phosphorus pentoxide (P₂O₅), Titanium dioxide (TiO₂), Chlorine (Cl), or the like. Further, each core of the plurality of cores 102 is up-doped with Germanium (Ge) to increase the refractive index of each core of the plurality of cores 102. Additionally, each core of the plurality of cores 102 is up-doped with greater than or equal to 1 wt. % and less than or equal to 10 wt. % Ge.

In accordance with an embodiment of the present disclosure, the plurality of buffer layers 104 i.e. the first through fourth buffer layers 104a, 104b, 104c and 104d envelop the plurality of cores 102 i.e. first through fourth cores 102a, 102b, 102c and 102d. In particular, the plurality of buffer layers includes the first buffer layer 104a, the second buffer layer 104b, the third buffer layer 104c, and the fourth buffer layer 104d. Moreover, the first buffer layer 104a is provided on an outer periphery of the first core 102a, the second buffer layer 104b is provided on an outer periphery of the second core 102b, the third buffer layer 104c is provided on an outer periphery of the third core 102c, and the fourth buffer layer 104d is provided on an outer periphery of the fourth core 102d. Furthermore, the first through fourth buffer layers 104a, 104b, 104c and 104d include a first through fourth buffer RRIs Δ_{b1}- Δ_{b4}. Further, the first buffer layer 104a has a first buffer RRI Δ_{b1}, the second buffer layer 104b has a second buffer RRI Δ_{b2}, the third buffer layer 104c has a third buffer RRI Δ_{b3}, and the fourth buffer layer 104d has a fourth buffer RRI Δ_{b4}.

In accordance with an embodiment of the present disclosure, the first through fourth buffer RRIs Δ_{b1}- Δ_{b4} are equal. Alternatively, the first through fourth buffer RRIs Δ_{b1}- Δ_{b4} may be different.

Particularly, the first through fourth buffer RRIs Δ_{b1}- Δ_{b4} of the first through fourth buffer layers 104a, 104b, 104c and 104d is less than the first through fourth RRIs Δ_{c1} Δ _{c4} of the first through fourth cores 102a, 102b, 102c and 102d, respectively. Moreover, the first through fourth buffer RRIs Δ_{b1}- Δ_{b4} of the first through fourth buffer layers 104a, 104b, 104c and 104d is more than - 0.25%.

Further, the first through fourth buffer layers 104a, 104b, 104c and 104d have a predefined buffer layer radius. The predefined buffer layer radius of each of the first through fourth buffer layers 104a, 104b, 104c and 104d is in a range of 4 µm to 7 µm.

In accordance with an embodiment of the present disclosure, the predefined buffer layer radius of each of the first through fourth buffer layers 104a, 104b, 104c and 104d is equal. Alternatively, the predefined buffer layer thickness of each of the first through fourth buffer layers 104a, 104b, 104c and 104d may be different.

Further, the first through fourth buffer layers 104a, 104b, 104c and 104d facilitate in providing a high effective area by increasing the MFD of the multi-core optical fiber 100. The MFD depends on the predefined buffer layer radius of the first through fourth buffer layers 104a, 104b, 104c and 104d such that the effective area and the MFD of the multi-core optical fiber 100 increases with an increase in the radius of the first through fourth buffer layers 104a, 104b, 104c and 104d. Further, the predefined radius of the first through fourth buffer layers 104a, 104b, 104c and 104d in the range of 4 µm to 7 µm facilitate increasing confinement of the optical signal while having a higher value of the MFD, lower low crosstalk, and lower micro and macro bend.

In accordance with an embodiment of the present disclosure, the MFD is in a range of 8.7 µm to 9.5 µm.

In accordance with an embodiment of the present disclosure, the first through fourth trench layers 106a, 106b, 106c and 106d is provided such that the first trench layer 106a envelops an outer periphery of the first buffer layer 104a, the second trench layer 106b envelops an outer periphery of the second buffer layer 104b, the third trench layer 106c envelops an outer periphery of the third buffer layer 104c, and the fourth trench layer 106d envelops an outer periphery of the fourth buffer layer 104d.

In accordance with an embodiment of the present disclosure, the first through fourth trench layers 106a, 106b, 106c and 106d is provided between the corresponding first through fourth cores 102a102d and the cladding 108. In particular, the first through fourth trench layers 106a, 106b, 106c and 106d have a first through fourth trench RRIs Δₜ₁- Δ ₜ₄.

In accordance with an embodiment of the present disclosure, the first through fourth trench RRIs Δₜ₁- Δ ₜ₄ is less than the first through fourth buffer RRIs Δ_{b1}- Δ_{b4} of the first through fourth buffer layers 104a, 104b, 104c and 104d. In particular, the first through fourth trench RRIs Δₜ₁- Δₜ₄ isin a range of -0.1 % to -0.25%. The MFD having a higher value results in an increase in crosstalk due to an overlap between neighbouring cores of the plurality of cores 102. Moreover, the macro and micro bend is increased due to a lower distance between the plurality of cores 102 and a glass boundary. The first through fourth trench layers 106a, 106b, 106c and 106d having the first through fourth trench RRIs Δₜ₁- Δₜ₄ are provided to control the crosstalk and the macro and micro bend of the multi-core optical fiber 100.

Furthermore, the role of the first through fourth trench layers 106a, 106b, 106c and 106d is to suppress the optical signal traveling to the cladding 108 and to focus the optical signal on the first through fourth cores 102a, 102b, 102c and 102d to reduce the crosstalk between adjacent cores of the plurality of cores 102. Further, the first through fourth trench layers 106a, 106b, 106c and 106d facilitate in fabricating more densely arranged cores in the multi-core optical fiber 100.

In accordance with an embodiment of the present disclosure, the first through fourth trench layers 106a, 106b, 106c and 106d are made up of a material selected from at least one of, a plastic, a pure silica glass, and the like. In particular, each of the first through fourth trench layers 106a, 106b, 106c and 106d is made up of a silica glass doped with a suitable down-dopant. Each of the first through fourth trench layers 106a, 106b, 106c and 106d is down-doped with one or more down-dopants for decreasing refractive index of the silica glass.

In accordance with an embodiment of the present disclosure, the first through fourth trench layers 106a, 106b, 106c and 106d are down-doped with fluorine (F).

Further, each of the first through fourth trench layers 106a, 106b, 106c and 106d has an associated refractive index profile. The refractive index profile of each of the first through fourth trench layers 106a, 106b, 106c and 106d has a predefined trench alpha value. Further, the predefined trench alpha value is in a range of 7 to 10 such that the selected trench alpha value facilitates in providing a lower sensitivity to dispersion for the multi-core optical fiber 100. Additionally, the first through fourth trench layers 106a, 106b, 106c and 106d have a trench radius in a range of 9 µm to 12 µm. The first through fourth trench layers 106a, 106b, 106c and 106d have a trench diameter that is in a range of 18 µm to 24 µm. The first trench layer 106a, the second trench layer 106b, the third trench layer 106c, and the fourth trench layer 106d respectively has a first trench diameter, a second trench diameter, a third trench diameter, and a fourth trench diameter.

In accordance with an embodiment of the present disclosure, numerical values of the first trench diameter, the second trench diameter, the third trench diameter, and the fourth trench diameter are equal. Alternatively, the numerical values of the first trench diameter, the second trench diameter, the third trench diameter, and the fourth trench diameter may be different.

Fig. 1B is a cross-sectional view illustrating the multi-core optical fiber 100 in accordance with an embodiment of the present disclosure. The multicore optical fiber 100 comprises the first through fourth cores 102a, 102b, 102c and 102d, the first through fourth buffer layers 104a, 104b, 104c and 104d, the first through fourth trench layers 106a, 106b, 106c and 106d, a cladding layer 108, and a coating layer 110. In particular, the multi-core optical fiber 100 has the central axis 107 such that the plurality of cores 102 are arranged along the central axis 107 running longitudinally, *i.e.,* generally parallel to the central axis 107.

In accordance with an embodiment of the present disclosure, the plurality of cores 102 are arranged in the predefined lattice on the cross-section of the multi-core optical fiber 100 perpendicular to the axis extending parallelly along the central axis 107 of the multi-core optical fiber 100. In particular, the predefined lattice is the square lattice. Moreover, the first through fourth cores 102a, 102b, 102c and 102d are made up of a silica glass doped with a suitable up-dopant. The first through fourth cores 102a, 102b, 102c and 102d are up-doped with one or more up-dopants to increase refractive index of the silica glass. Furthermore, suitable up-dopants are selected from, but not limited to, Aluminum oxide (Al₂O₃), Phosphorus pentoxide (P₂O₅), Titanium dioxide (TiO₂), Chlorine (Cl), or the like. Further, each core of the plurality of cores 102 is up-doped with Germanium (Ge) to increase the refractive index of each of the first through fourth cores 102a, 102b, 102c and 102d. Additionally, each of the first through fourth cores 102a, 102b, 102c and 102d is up-doped with greater than or equal to 1 wt. % and less than or equal to 10 wt. % Ge.

Further, the first through fourth cores 102a, 102b, 102c and 102d have an associated refractive index profile. The refractive index profile of each of the first through fourth cores 102a, 102b, 102c and 102d has a predefined core alpha value. Further, the core alpha value has a significant impact on how the optical signal distributes inside each of the first through fourth cores 102a, 102b, 102c and 102d and thus affects an effective refractive index of a guiding mode in the multi-core optical fiber 100. Further, the core alpha value has a significant impact on dispersion and a mode field diameter (MFD). When a mode distribution penetrates more inside the cladding 108, then an integral overlap between modes increases which in turn increases crosstalk. Additionally, very low core alpha value leads to a low effective index of mode (i.e., poor confinement of the mode) and very high core alpha value (i.e., a step index profile) is not possible to manufacture. The predefined core alpha value is selected in a range of 5 to 9 such that the selected core alpha value facilitates in providing a lower sensitivity to dispersion for the multi-core optical fiber 100.

Each of the first through fourth cores 102a, 102b, 102c and 102d has a circular shape. Further, the first through fourth core 102a, 102b, 102c and 102d may have a core radius that is in a range of 3.5 micrometers (µm) to 5 µm. The first through fourth core 102a, 102b, 102c and 102d have a core diameter in a range of 7 µm to 10 µm. Further, the first core 102a, the second core 102b, the third core 102c, and the fourth core 102d has the first core diameter, the second core diameter, the third core diameter, and the fourth core diameter, respectively.

In accordance with an embodiment of the present disclosure, numerical values of the first core diameter, the second core diameter, the third core diameter, and the fourth core diameter are equal. Alternatively, the numerical values of the first core diameter, the second core diameter, the third core diameter, and the fourth core diameter may be different.

Further, each pair of the cores of the first through fourth cores 102a, 102b, 102c and 102d has a predefined core pitch that defines a distance between two corresponding cores of the first through fourth cores 102a, 102b, 102c and 102d. The predefined core pitch is in a range of 35 µm to 45 µm.

In an exemplary example, the first core 102a and the adjacent second core 102b has a first core pitch ∧1, the second core 102a and the adjacent third core 102b has a second core pitch ∧2, the third core 102c and the adjacent fourth core 102d has a third core pitch ∧3, and the fourth core 102d and the adjacent first core 102a has a fourth core pitch ∧4. Particularly, numerical values of the first through fourth core pitch ∧1-∧4 are in the range of 35 µm to 45 µm.

In accordance with an embodiment of the present disclosure, the numerical values of the first through fourth core pitch ∧1-∧4 arebe equal. Alternatively, the numerical value of the first through fourth core pitch ∧1-∧4 may be different.

Further, the first through fourth cores 102a, 102b, 102c and 102d have a first through fourth core relative refractive indexes (RRIs) Δ_{c1}- Δ_{c4}. The first core 102a has a first core RRI Δ_{c1}, the second core 102a has a second core RRI Δ_{c2}, the third core 102c has a third core RRI Δ_{c3}, and the fourth core 102d has a fourth core RRI Δ_{c4}.

In accordance with an embodiment of the present disclosure, the first through fourth core RRIs Δ_{c1}- Δ_{c4} are equal. Alternatively, the first through fourth core RRIs Δ_{c1}- Δ_{c4} may be different. Moreover, the first through fourth core RRIs Δ_{c1}- Δ_{c4} are in a range of 0.3% to 0.45%.

In accordance with an embodiment of the present disclosure, the first through fourth buffer layers 104a, 104b, 104c and 104d envelop the plurality of cores 102 i.e. the first through fourth cores 102a, 102b, 102c and 102d. The first buffer layer 104a is provided on the outer periphery of the first core 102a, the second buffer layer 104b is provided on the outer periphery of the second core 102b, the third buffer layer 104c is provided on the outer periphery of the third core 102c, the fourth buffer layer 104d is provided on the outer periphery of the fourth core 102d. Moreover, the first through fourth buffer layers 104a, 104b, 104c and 104d have a first through fourth buffer RRIs Δ_{b1}- Δ_{b4}. The first buffer layer 104a has a first buffer RRI Δ_{b1}, the second buffer layer 104b has a second buffer RRI Δ_{b2}, the third buffer layer 104c has a third buffer RRI Δ_{b3}, and the fourth buffer layer 104d has a fourth buffer RRI Δ_{b4}.

In accordance with an embodiment of the present disclosure, the first through fourth buffer RRIs Δ_{b1}- Δ_{b1} are equal. Alternatively, the first through fourth buffer RRIs Δ_{b1}- Δ_{b4} may be different. In particular, the first through fourth buffer RRIs Δ_{b1}- Δ_{b4} of the first through fourth buffer layers 104a, 104b, 104c and 104d are less than the first through fourth RRIs Δ_{c1}- Δ_{c4} of the first through fourth cores 102a, 102b, 102c and 102d, respectively. Moreover, the first through fourth buffer RRIs Δ_{b1}- Δ_{b4} of the first through fourth buffer layers 104a, 104b, 104c and 104d is more than -0.25%.

Further, the first through fourth buffer layers 104a, 104b, 104c and 104d has a predefined buffer layer radius. The predefined buffer layer radius of each of the first through fourth buffer layers 104a, 104b, 104c and 104d is in a range of 4 µm to 7 µm.

In accordance with an embodiment of the present disclosure, the predefined buffer layer radius of each of the first through fourth buffer layers 104a, 104b, 104c and 104d is equal. Alternatively, the predefined buffer layer radius of each of the first through fourth buffer layers 104a, 104b, 104c and 104d may be different.

The first through fourth buffer layers 104a, 104b, 104c and 104d facilitate in providing a high effective area by increasing the MFD of the multicore optical fiber 100. The MFD depends on the predefined buffer layer radius of the first through fourth buffer layers 104a, 104b, 104c and 104d such that the effective area and the MFD of the multi-core optical fiber 100 increases with increase in the predefined radius of the first through fourth buffer layers 104a, 104b, 104c and 104d. Further, the predefined radius of the first through fourth buffer layers 104a, 104b, 104c and 104d in the range of 4 µm to 7 µm may facilitate increasing confinement of the optical signal, while having a higher value of the MFD, lower low crosstalk, and lower micro and macro bend.

In accordance with an embodiment of the present disclosure, the MFD is in a range of 8.7 µm to 9.5 µm.

In accordance with an embodiment of the present disclosure, the first through fourth trench layers 106a, 106b, 106c and 106d are provided such that the first trench layer 106a envelops the outer periphery of the first buffer layer 104a, the second trench layer 106b envelops the outer periphery of the second buffer layer 104b, the third trench layer 106c envelops the outer periphery of the third buffer layer 104c, and the fourth trench layer 106d envelops the outer periphery of the fourth buffer layer 104d.

In accordance with an embodiment of the present disclosure, the first through fourth trench layers 106a, 106b, 106c and 106d are provided between the corresponding first through fourth cores 102a102d and the cladding 108. In particular, the first through fourth trench layers 106a, 106b, 106c and 106d have a first through fourth trench RRIs Δₜ₁- Δₜ₄.

In accordance with an embodiment of the present disclosure, the first through fourth trench RRIs Δₜ₁- Δₜ₄ is less than the first through fourth buffer RRIs Δ_{b1}- Δ_{b4} of the first through fourth buffer layers 104a, 104b, 104c and 104d. Particularly, the first through fourth trench RRIs Δₜ₁- Δₜ₄ is in a range of -0.1% to -0.25%. The MFD having a higher value results in an increase in crosstalk due to an overlap between neighbouring cores of the plurality of cores 102. Moreover, the macro and micro bend is increased due to a lower distance between the plurality of cores 102 and a glass boundary. Furthermore, the first through fourth trench layers 106a, 106b, 106c and 106d having the first through fourth trench RRIs Δₜ₁- Δₜ₄ are provided to control the crosstalk and the macro and micro bend of the multi-core optical fiber 100.

Further, the role of the first through fourth trench layers 106a, 106b, 106c and 106d is to suppress the optical signal traveling to the cladding 108 and to focus the optical signal on the first through fourth cores 102a, 102b, 102c and 102d to reduce the crosstalk between adjacent cores of the plurality of cores 102. The first through fourth trench layers 106a, 106b, 106c and 106d facilitate in fabricating more densely arranged cores in the multi-core optical fiber 100.

In accordance with an embodiment of the present disclosure, the first through fourth trench layers 106a, 106b, 106c and 106d are made up of a material selected from at least one of, a plastic, a pure silica glass, and the like. Particularly, each of the first through fourth trench layers 106a, 106b, 106c and 106d is made up of a silica glass doped with a suitable down-dopant. Each of the first through fourth trench layers 106a, 106b, 106c and 106d is down-doped with one or more down-dopants to decrease a refractive index of the silica glass.

In accordance with an embodiment of the present disclosure, the first through fourth trench layers 106a, 106b, 106c and 106d are down-doped with fluorine (F).

Further, each of the first through fourth trench layers 106a, 106b, 106c and 106d has an associated refractive index profile. The refractive index profile of each of the first through fourth trench layers 106a, 106b, 106c and 106d has a predefined trench alpha value. The predefined trench alpha value is in a range from about 7 to about 10 such that the selected trench alpha value facilitates in providing a lower sensitivity to dispersion for the multi-core optical fiber 100. Further, the first through fourth trench layers 106a, 106b, 106c and 106d have a trench radius in a range from about 9 µm to about 12 µm. The first through fourth trench layers 106a, 106b, 106c and 106d have a trench diameter in a range from about 18 µm to about 24 µm. Additionally, the first trench layer 106a, the second trench layer 106b, the third trench layer 106c, and the fourth trench layer 106d has a first trench diameter, a second trench diameter, a third trench diameter, and a fourth trench diameter, respectively.

In accordance with an embodiment of the present disclosure, numerical values of the first trench diameter, the second trench diameter, the third trench diameter, and the fourth trench diameter are equal. Alternatively, the numerical values of the first trench diameter, the second trench diameter, the third trench diameter, and the fourth trench diameter may be different.

In accordance with an embodiment of the present disclosure, each buffer layer of the plurality of buffer layers 104a, 104b, 104c and 104d has traces of an up-dopant and a down-dopant. Each buffer layer of the plurality of buffer layers 104a, 104b, 104c and 104d has traces of the up-dopant diffused through corresponding edges of each corresponding core of the plurality of cores 102a, 102b, 102c and 102d. Moreover, each buffer layer of the plurality of buffer layers 104a, 104b, 104c and 104d has traces of the down-dopant diffused through corresponding edges of each corresponding trench layer of the plurality of trench layers 106a, 106b, 106c and 106d.

In accordance with an embodiment of the present disclosure, the multi-core optical fiber 100 includes the cladding 108 enveloping an outer circumferential surface of the plurality of trench layers 106 i.e. the first through fourth trench layers 106a, 106b, 106c and 106d. In particular, the cladding 108 is made up of a material selected from at least one of, a plastic, a glass, and the like. Moreover, the cladding 108 has an associated outer cladding thickness OCT that behaves a predefined value depending on particular application attributes.

In an exemplary example, the OCT is defined as a distance from the centre of any of the core of the plurality of cores 102 to an interface of the cladding 108 with the coating 110. Particularly, the cladding 108 has an associated refractive index greater than the refractive index of each of the core of the plurality of cores 102.

In an exemplary example, when the refractive index of each of the core of the plurality of cores 102 is n1 and the refractive index of the cladding 108 is n2, then n2 is greater than n1.

In accordance with an embodiment of the present disclosure, the multi-core optical fiber 100 further has the coating layer 110. In particular, the coating layer 110 has one or more coatings including a primary coating 110a and a secondary coating 110b.

In accordance with an embodiment of the present disclosure, the primary coating 110a is made up of an ultraviolet (UV) light curable resin which is formed of an exemplary first colored material.

In accordance with an embodiment of the present disclosure, the primary coating 110a and the secondary coating 110b have the UV light curable acrylate mixture of monomers, oligomers, photo initiators, and additives, such that the mixtures are cured separately.

In accordance with an embodiment of the present disclosure, the first through fourth core 102a, 102b, 102c and 102d, the relative refractive index is between 0.3-0.45%, the radius is between 3.5-5 µm, and the core alpha is between 5-9. Particularly, the first through fourth trench layers 106a, 106b, 106c and 106d, the relative refractive index is between -0.1-0.25%, the radius is between 9-12 µm, and the alpha is between 7-10. Moreover, the core pitch is between 35-45 microns. Furthermore, the multi-core optical fiber 100 includes a buffer region. The buffer radius is between 4-7 microns. Further, the multi-core optical fiber 100 has an inter-core crosstalk less than -30 decibel/kilometre (dB/km), the MFD at a wavelength of 1550 nanometres (nm) between 8.7-9.5 µm, and the cable cut-off is less than 1260 nm.

In an exemplary example, a multicore fiber with core relative refractive index of 0.4%, core radius of 4.5 µm and core alpha of 8 with trench relative refractive index of -0.17%, trench radius of 9.55 µm, and trench alpha of 8, having no buffer region and having a core pitch equal to 40, has an inter-core crosstalk equal to -45 decibel/kilometre (dB/km), MFD at a wavelength of 1550 nm is 8.71 µm, and the cable cut-off is 1110 nm.

In another exemplary example, a multicore fiber with a buffer region defined by a buffer radius of 5.25 microns and having a pitch of 40 microns, has a core relative refractive index of 0.35%, core radius of 3.5 µm, core alpha of 6, trench relative refractive index of 0.24%, trench radius of 11.25 µm and trench alpha of 7. In particular, the multicore fiber demonstrates an inter-core crosstalk equal to -32 decibel/kilometre (dB/km), MFD at a wavelength of 1550 nanometres (nm) is 8.9 µm, and the cable cut-off is 950 nm.

In accordance with an embodiment of the present disclosure, the multi-core optical fiber 100 reduces an effective area by increasing the MFD of the multi-core optical fiber 100. Moreover, the plurality of trench layers 106 having high relative refractive index are provided to facilitate in controlling the inter-core crosstalk, macro and micro bend. Furthermore, the plurality of buffer layers 104 may be provided with minimal thickness that may increase the confinement of the optical signal and while having a higher value of the MFD. As the minimal thickness of the plurality of buffer layers 104 moves the plurality of buffer layers 104 near to the plurality of cores 102, the inter-core crosstalk reduces and provides a lower micro and macro bend.

It will be apparent to a person skilled in the art that the plurality of cores 102 are shown to be arranged in the square lattice to make the illustrations concise and clear and should not be considered as a limitation of the present disclosure. In various alternate aspects, the plurality of cores 102 may be arranged in any type of the predefined lattice, without deviating from the scope of the present disclosure.

It will be apparent to a person skilled in the art that the multi-core optical fiber 100 is shown to have four buffer layers (i.e., the first through fourth buffer layers 104a, 104b, 104c and 104d) to make the illustrations concise and clear and should not be considered as a limitation of the present disclosure. In various other aspects, the plurality of buffer layers 104 may have same number of buffer layers as the number of cores of the plurality of cores 102 such that each core of the plurality of cores 102 has at least one corresponding buffer layer of the plurality of buffer layers 104, without deviating from the scope of the present disclosure.

It will be apparent to a person skilled in the art that the first through fourth trench layers 106a, 106b, 106c and 106d are shown to be down-doped with fluorine (F) to make the illustrations concise and clear and should not be considered as a limitation of the present disclosure. In various other aspects, the first through fourth trench layers 106a, 106b, 106c and 106d may be down-doped with any suitable down-dopant, without deviating from the scope of the present disclosure.

It will be apparent to a person skilled in the art that the multi-core optical fiber 100 is shown to have four trench layers (i.e., the first through fourth trench layers 106a, 106b, 106c and 106d) to make the illustrations concise and clear and should not be considered as a limitation of the present disclosure. In various other aspects, the plurality of trench layers 106 may have same number of trench layers as the number of buffer layers of the plurality of buffer layers 104 such that each buffer layer of the plurality of buffer layers 104 has at least one corresponding trench layer of the plurality of trench layers 106, without deviating from the scope of the present disclosure.

It will be apparent to a person skilled in the art that the first through fourth core 102a, 102b, 102c and 102d are shown to have the circular shape to make the illustrations concise and clear and should not be considered as a limitation of the present disclosure. In various other aspects, the first through fourth core 102a, 102b, 102c and 102d may have any type of shape such as, but not limited to, an oval shape, a hexagonal shape, a triangular shape, an irregular shape, and the like without deviating from the scope of the present disclosure.

It will be apparent to a person skilled in the art that the multi-core optical fiber 100 is shown to have four cores (i.e., the first through fourth cores 102a, 102b, 102c and 102d) to make the illustrations concise and clear and should not be considered as a limitation of the present disclosure. In various other aspects, the multi-core optical fiber 100 may have more than four cores, without deviating from the scope of the present disclosure. Specifically, the multicore optical fiber 100 may have an even number of cores. In other words, the multi-core optical fiber 100 may have fibers having a numerical count that is in multiple of two.

It will be apparent to a person skilled in the art that the multi-core optical fiber 100 is shown to have four buffer layers (i.e., the first through fourth buffer layers 104a, 104b, 104c and 104d) to make the illustrations concise and clear and should not be considered as a limitation of the present disclosure. In various other aspects, the plurality of buffer layers 104 may have same number of buffer layers as the number of cores of the plurality of cores 102 such that each core of the plurality of cores 102 has at least one corresponding buffer layer of the plurality of buffer layers 104, without deviating from the scope of the present disclosure.

It will be apparent to a person skilled in the art that the coating layer 110 is shown to have the primary coating 110a and the secondary coating 110b to make the illustrations concise and clear and should not be considered as a limitation of the present disclosure. In various other aspects, the coating layer 110 may have any number of layers similar to the primary layer 110a and/or the secondary layer 110b without deviating from the scope of the present disclosure.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

## Claims

1. A multi-core optical fiber (100), **characterized in that**:
a plurality of cores (102) extending parallelly along a central axis (107) of the multi-core optical fiber, wherein each core of the plurality of cores is up-doped with an up-dopant;
a one or more buffer layers that envelops at least one of the plurality of cores and each core of the plurality of cores; and
one or more trench layers enveloping at least one of each of the plurality of buffer layers and the plurality of buffer layers, wherein each trench layer of the plurality of trench layers is down-doped with a down-dopant.

2. The multi-core optical fiber of claim 1, wherein each buffer layer of the plurality of buffer layers has a predefined buffer layer radius in a range of 4 micrometers (µm) to 7 µm.

3. The multi-core optical fiber of claim 1, wherein a core pitch between a pair of adjacent cores of the plurality of cores is in range of 35 µm to 45 µm.

4. The multi-core optical fiber of claim 1, wherein each core of the plurality of cores, each buffer layer of the plurality of buffer layers, and each trench layer of the plurality of trench layers has an associated core relative refractive index RRI, a buffer RRI, and a trench RRI, respectively, wherein the core RRI is greater than the buffer RRI and the buffer RRI is greater than the trench RRI.

5. The multi-core optical fiber of claim 1, further comprising a cladding and a coating such that the cladding envelops each trench layer of the plurality of trench layers and the coating envelops the cladding.

6. The multi-core optical fiber of claim 1, wherein each core of the plurality of cores has a shape selected from at least one of, a circular shape, an oval shape, a hexagonal shape, and a triangular shape.

7. The multi-core optical fiber of claim 1, wherein each buffer layer of the plurality of buffer layers has traces of an up-dopant and a down-dopant, wherein the up-dopant is associated with the plurality of cores and the down-dopant is associated with the plurality of trench layers.

8. The multi-core optical fiber of claim 1, wherein the up-dopant is germanium and the down-dopant is fluorine.

9. The multi-core optical fiber of claim 1, wherein an inter-core crosstalk between the plurality of cores at a wavelength of 1550 nanometres (nm) is less than -30 decibel/kilometres (dB/km).

10. A multi-core optical fiber, **characterized in that**:
a plurality of cores extending parallelly along a central axis of the multi-core optical fiber, wherein each core of the plurality of cores is up-doped with an up-dopant;
a plurality of buffer layers, wherein each buffer layer of the plurality of buffer layers envelops a corresponding core of the plurality of cores; and
a plurality of trench layers, wherein each trench layer of the plurality of trench layers envelops a corresponding buffer layer of the plurality of buffer layers, wherein each trench layer of the plurality of trench layers is down-doped with a down-dopant.

11. The multi-core optical fiber of claim 10, wherein the plurality of cores is an even number of cores.

12. The multi-core optical fiber of claim 10, wherein each buffer layer of the plurality of buffer layers has a predefined buffer layer radius in a range of 4 micrometers (µm) to 7 µm.

13. The multi-core optical fiber of claim 10, wherein a core pitch between a pair of adjacent cores of the plurality of cores is in range of 35 µm to 45 µm.

14. The multi-core optical fiber of claim 10, wherein each core of the plurality of cores, each buffer layer of the plurality of buffer layers, and each trench layer of the plurality of trench layers has an associated core relative refractive index RRI, a buffer RRI, and a trench RRI, respectively, wherein the core RRI is greater than the buffer RRI and the buffer RRI is greater than the trench RRI.

15. The multi-core optical fiber of claim 10, further comprising a cladding and a coating such that the cladding envelops each trench layer of the plurality of trench layers and the coating envelops the cladding.

16. The multi-core optical fiber of claim 10, wherein each core of the plurality of cores has a shape selected from at least one of, a circular shape, an oval shape, a hexagonal shape, and a triangular shape.

17. The multi-core optical fiber of claim 10, wherein each buffer layer of the plurality of buffer layers has traces of an up-dopant and a down-dopant, wherein the up-dopant is associated with the plurality of cores and the down-dopant is associated with the plurality of trench layers.

18. The multi-core optical fiber of claim 10, wherein the up-dopant is germanium and the down-dopant is fluorine.

19. The multi-core optical fiber of claim 10, wherein an inter-core crosstalk between the plurality of cores at a wavelength of 1550 nanometres (nm) is less than -30 decibel/kilometres (dB/km).
